# EUROPÄISCHE PATENTSCHRIFT

(11) **EP 1 354 748 B1**
(45) Veröffentlichungstag und Bekanntmachung des Hinweises auf die Patenterteilung: **20.07.2005**
(21) Anmeldenummer: 03008217.6
(22) Anmeldetag: 09.04.2003
(51) Int. Cl.: B60K 23/04

(54) **Vorrichtung und Verfahren zur selbsttätigen Ansteuerung von mindestens einer Differentialsperre**
Device and method for controlling automatically at least one differential lock
Dispositif et procédé de commande du blocage d'au moins un différentiel

(30) Priorität: 15.04.2002 DE 10216565
(43) Veröffentlichungstag der Anmeldung: 22.10.2003
(73) Patentinhaber: ZF FRIEDRICHSHAFEN Aktiengesellschaft, 88038 Friedrichshafen (DE)
(72) Erfinder: Frühwirth, Gerhard, 4274 Schönau (AT)

(56) Entgegenhaltungen:
- EP-A- 0 911 205
- WO-A-81/01690
- GB-A- 2 358 163
- US-A- 4 896 738
- US-A- 5 332 059
- PATENT ABSTRACTS OF JAPAN vol. 2000, no. 25, 12. April 2001 (2001-04-12) -& JP 2001 233074 A (HINO MOTORS LTD), 28. August 2001 (2001-08-28)

## Beschreibung

Die Erfindung betrifft eine Vorrichtung zur selbsttätigen Ansteuerung von mindestens einer Differentialsperre im Antriebsstrang eines Fahrzeugs gemäß dem Oberbegriff des Anspruchs 1 und ein Verfahren zum Betrieb dieser Vorrichtung gemäß Anspruch 8.

Geländegängige Fahrzeuge haben hohe Anforderungen an die Mobilität und sind im allgemeinen mit einem oder mehreren sperrbaren Differentialen ausgestattet.

Aus der gattungsbildende DE 197 49 919 A1 ist ein Verfahren bekannt zur selbsttätigen Sperrung von Differentialen eines allradgetriebenen Fahrzeugs. Sensoren bilden Impulse entsprechend der jeweiligen Drehung von Wellen des Differentials und, um den Einfluß des Lenkrollradius zu berücksichtigen, wird die Änderung des Lenkwinkels ermittelt. Die Impulse entsprechend der jeweiligen Drehung der Wellen des Differentials und entsprechend der Änderung des Lenkwinkels werden einer Vorrichtung zur Ansteuerung einer Differentialsperre zugeführt, die bei Schlupf die Differentialsperre aktiviert. Beim Verfahren gemäß diesem Stand der Technik werden unterschiedliche Geschwindigkeiten der einzelnen Räder durch unterschiedliche Bahnen der Räder aus großen Bodenunebenheiten beim Betrieb des Fahrzeugs im Gelände nicht berücksichtigt. Die Geschwindigkeitsunterschiede aus großen Bodenunebenheiten beim Betrieb des Fahrzeugs im Gelände an den einzelnen Rädern würden einen bedeutenden Schlupf vortäuschen, so dass beim Verfahren gemäß der DE 197 49 919 A1 eine Differentialsperre im Antriebsstrang des Fahrzeugs aktiviert würde, wodurch es zu Verspannungen des Antriebsstrangs in sich käme, die den Bedarf an Antriebsmoment und damit den Treibstoffverbrauch erhöhen.

Aufgabe der Erfindung ist es, eine Vorrichtung zur selbsttätigen Ansteuerung von mindestens einer in der Sperrwirkung steuerbaren Differentialsperre im Antriebsstrang eines Fahrzeugs zu schaffen, die Geschwindigkeitsunterschiede aus großen Bodenunebenheiten beim Betrieb des Fahrzeugs im Gelände an den einzelnen Rädern erfaßt und ein Verfahren zum Betrieb dieser Vorrichtung.

Die Lösung erfolgt mit einer Vorrichtung zur selbsttätigen Ansteuerung von mindestens einer Differentialsperre im Antriebsstrang eines Fahrzeugs mit den Merkmalen des Anspruchs 1 und einem Verfahren zum Betrieb dieser Vorrichtung mit den Merkmalen des Anspruchs 8.

Gemäß der Erfindung ist eine Vorrichtung zur selbsttätigen Ansteuerung von mindestens einer Differentialsperre im Antriebsstrang eines Fahrzeugs, insbesondere einer Differentialsperre im Antriebsstrang eines allradgetriebenen Fahrzeugs, mit Sensoren ausgestattet, die Impulse entsprechend der jeweiligen Drehung von Wellen des Differentials abgeben, die mindestens einer Steuervorrichtung zugeführt werden, die in Abhängigkeit von den Impulsen Schlupfsignale bildet und eine Sperrkupplung des Differentials steuert. Gemäß der Erfindung ist zudem mindestens ein Sensor vorgesehen, mit dem eine Information entsprechend der Einfederwege bzw. Aufstandskraft der einzelnen Räder des Fahrzeugs gebildet und der Steuervorrichtung zugeführt werden, die als Einflußgrößen für das Verhalten der Steuerung der Sperrkupplung des Differentials mit herangezogen werden. Mit der Erfindung ist es möglich die Ursachen für unterschiedliche Geschwindigkeiten der einzelnen Räder am Antriebsstrang des Fahrzeugs zu ermitteln und so zu unterscheiden zwischen unterschiedlichen Geschwindigkeiten wegen Durchdrehen eines oder mehrerer der Räder bei verminderter oder fehlender Traktion oder unterschiedlichen Geschwindigkeiten der einzelnen Räder, weil z. B. ein Rad beim Überfahren eines Hindernisses oder beim Durchfahren einer Vertiefung in der Fahrbahn einen größeren Weg zurücklegt. Durch die Information zum Einfedern der Räder des Fahrzeugs kann das Ansprechverhalten der Sperrkupplung(en) des mindestens einen Differentials genauer und schneller werden, da so der kinematische Schlupf, der durch Ein-/Ausfedern wegen Fahrbahnunebenheiten hervorgerufen wird, von anders bedingten Geschwindigkeitsunterschieden getrennt und die sich ergebende Verteilung übertragbarer Antriebsmomente vorausschauend bestimmt werden kann. Wenn erkennbar ist, dass ein Rad eines Fahrzeugs maximal ausgefedert ist, wird dieses Rad nur mehr eine geringe bis keine Aufstandskraft haben. Dann ist es wahrscheinlich, dass bei über ein Differential aufgebrachten Momenten die Radgeschwindigkeit ungewollt stark von der Geschwindigkeit des Fahrzeugs abweichen kann. Hier ergibt sich gemäß der Erfindung ein wesentlicher Vorteil, da mit der Information der Federwege der Räder des Fahrzeugs und des Antriebsmoments eine Differentialsperre vorausschauend in Bereitschaft gebracht und eine entsprechend vorausberechnete Sperrwirkung eingestellt werden kann, so dass deren Sperrwirkung schnell verfügbar ist und so Schläge im Antriebsstrang vermieden werden können. Kommt es trotz dieser Maßnahmen noch zum Durchdrehen der Antriebsräder, so ist eine erhöhte Sperrwirkung schnell verfügbar, da in diesem Fall nur ein geringes zusätzliches Sperrmoment aufgebracht werden muß, wodurch Schläge im Antriebsstrang vermieden werden.

Bei Kurvenfahrten sollen sich die Radgeschwindigkeiten eines Fahrzeugs vorzugsweise nach der Ackermann Bedingung verhalten. Um Antriebs- und Bremsmomente übertragen zu können, müssen sich entsprechend dem Antriebsmoment und Reibverhältnissen von der Ackermann Bedingung abweichende Geschwindigkeiten, wie ein Toleranzband um theoretische Werte, einstellen können. Zudem sollen Unebenheiten ausgeglichen werden können. Wird das Toleranzband der Geschwindigkeiten verlassen, liegt ein Grund zum Aktivieren der Differentialsperren vor. Erst wenn der Schlupf einen Wert erreicht hat, der definiert ist als maximales Hindernis bei einer Geschwindigkeit des Fahrzeugs, werden gemäß der Erfindung vorzugsweise Differentialsperren aktiviert. Gemäß der Erfindung soll also die Ansteuerung von mindestens einer Differentialsperre so erfolgen, dass diese nicht vollständig schließen, um Drehzahlgleichheit für alle Räder zu erreichen, sondern die Differentialsperren sollen so weit schließen, dass insgesamt die Summe des Schlupfs von allen Rädern eines Fahrzeugs minimal ist, insbesondere unter Berücksichtigung der kinematischen Verhältnisse bei Kurvenfahrt.

Gemäß einer bevorzugten Ausgestaltung der Erfindung sind die Sperrmomente an einer Achse in Abhängigkeit vom Unterschied der Einfederung zwischen linkem und rechtem Rad einstellbar. Die Erfindung macht sich die Erkenntnisse zu nutze, dass im Gelände zwar homogene aber schlechtere Reibwerte für die Räder vorliegen als auf der Straße und, dass die Federung des Fahrzeugs im allgemeinen für Aufstandskräfte der Räder sorgt, die ungefähr proportional zu den Einfederwegen der Räder sind. Damit sind auch die übertrag baren Antriebsmomente zu den Einfederwegen der Räder proportional, denn Differentiale haben die Eigenschaft, dass das an einer Achse übertragbare Drehmoment ohne Sperrung maximal das Zweifache des kleineren der von einem der beiden Räder der Achse übertragbaren Moments ist. Nur die Differenz ist von der einstellbaren Differentialsperre aufzubringen, so dass gemäß der Erfindung vorzugsweise die Sperrmomente vorausschauend in Abhängigkeit von Einfederungsunterschieden zwischen linkem und rechtem Rad einer Achse anzusteuern sind.

Gemäß einer weiteren bevorzugten Ausgestaltung der Erfindung sind die Sperrmonente für die weiteren im Antriebsstrang gelegenen Differentialsperren mit entsprechenden Sperrmomenten einstellbar. Die Erfindung macht sich hierbei die Erkenntnisse zu nutze, dass Differentialsperren über den Antriebsstrang verkoppelt sind und durch vorausschauende Steuerung der Sperrmomente der weiteren im Antriebsstrang gelegenen Differentialsperren mit entsprechenden Sperrmomenten ansonsten negative Folgeeffekte vermieden werden können.

Gemäß einer weiteren bevorzugten Ausgestaltung der Erfindung kann mindestens eine Differentialsperre formschlüssig ausgebildet sein.

Gemäß einer weiteren bevorzugten Ausgestaltung der Erfindung ist die Information der Einfederwege über den Fahrzeug-CAN-Bus des Fahrzeugs übertragbar. Dies kann z. B. mit einer elektrisch gesteuerten Federung durchgeführt werden.

Gemäß einer weiteren bevorzugten Ausgestaltung der Erfindung werden für ein Verfahren zum Betrieb der erfindungsgemäßen Vorrichtung vorzugsweise die Einfederwege oder die Drücke der Federbälge an den Rädern eines Fahrzeugs erfaßt und einer Steuervorrichtung zugeführt, so dass die Differentialsperren mit einem Sperrmoment proportional zu den Einfederwegen beaufschlagt werden. Als weitere Vorteile der Erfindung ergeben sich eine genauere Einstellung des Sperrmomentbedarfs und die Einhaltung der Radgeschwindigkeiten, wie diese sich auf Grund der Lenkradstellung ergeben sollten, so dass Verspannungen vermieden und die Lenkbarkeit des Fahrzeugs erhalten bleibt.

Gemäß einer weiteren bevorzugten Ausgestaltung der Erfindung werden für ein Verfahren zum Betrieb der erfindungsgemäßen Vorrichtung vorzugsweise Vorgaben für die Gewichtung einer Steuerung, Signale von einem Sensor für die Geschwindigkeit vₗᵢₙₖₛ des Rades vorn links, Signale von einem Sensor für die Geschwindigkeit v_{rechts} des Rades vorn rechts, Signale von einem Sensor für die Bezugs-Geschwindigkeit v_{Fzgref} des Fahrzeugs, Signale von einem Sensor für die Lenkwinkel des Fahrzeugs, Vorgaben für zulässigen Schlupf v_{schlupfzul} des Fahrzeugs, Vorgaben für Fahrzeuge mit Knicklenkung und hinsichtlich des Reifenrollradius Δv des Fahrzeugs und Signale von einem Sensor für die Einfederung Δv des Fahrzeugs über Leitungen übermittelt. Die Signale für die Geschwindigkeit vₗᵢₙₖₛ und für die Geschwindigkeit v_{rechts} der Räder vorn werden in einem 1. Addierer voneinander abgezogen. Die Signale für die Bezugs-Geschwindigkeit v_{Fzgref} und in Abhängigkeit von einer Lenktabelle ermittelte Signale für die jeweiligen Lenkwinkel des Fahrzeugs werden in einem Operator multipliziert und diese Ergebnisse von den Differenzen aus dem ersten Addierer in einem 2. Addierer abgezogen. Positive Ergebnisse Δvₛₗ₊ aus den Impulsen für die Geschwindigkeit vₗᵢₙₖₛ, die Geschwindigkeit v_{rechts}, die Bezugs-Geschwindigkeit v_{Fzgref} und die Lenkwinkel aus dem zweiten Addierer werden über Leitung einem dritten Addierer zugeführt, in dem die Vorgaben für zulässigen Schlupf v_{schlupfzul} abgezogen und die Summe aus den Vorgaben für Knicklenkung und Reifenrollradius Δv mit den Impulsen für die Einfederung Δv berücksichtigt werden. Negative Ergebnisse Δvₛₗ₋ aus den Impulsen für die Geschwindigkeit vₗᵢₙₖₛ, die Geschwindigkeit v_{rechts}, die Bezugs-Geschwindigkeit v_{Fzgref} und die Lenkwinkel aus dem zweiten Addierer werden über Leitung einem vierten Addierer zugeführt, in dem die Vorgaben für zulässigen Schlupf v_{schlupfzul} addiert und die Summe aus den Vorgaben für Knicklenkung und Reifenrollradius Δv mit den Impulsen für die Einfederung Δv berücksichtigt werden. Die positiven Ergebnisse Δvₛₗ₊ aus dem dritten Addierer werden mit den Vorgaben für die Gewichtung der Steuerung multipliziert, in einem ersten Integrator mit Begrenzung und über eine Schleife iteriert, und die Summe über Leitung ausgegeben. Die negativen Ergebnisse Δvₛₗ₋ aus dem vierten Addierer werden mit den Vorgaben für die Gewichtung der Steuerung multipliziert, in einem zweiten Integrator mit Begrenzung und über eine Schleife iteriert, und die Summe über Leitung ausgegeben. Die Absolutwerte der negativen Ergebnisse Δvₛₗ₋ werden in einem Rechenwerk gebildet. Ein weiteres Rechenelement ermittelt das Maximum aus den Summen der positiven Ergebnisse Δvₛₗ₊ und den Absolutwerten aus dem Operator und dieses Maximum wird in einem fünften Addierer mit einer Vorgabe aus Zuleitung für eine Schwelle Δsₘₐₓ für ein Hindernis abgeglichen und aus dem Abgleich mit einem Faktor k das angeforderte Sperrmoment ermittelt. In einem anschließenden Funktionsglied werden zu steile zeitliche Zu- und Abnahmen des angeforderten Sperrmoments begrenzt und dann dieses begrenzte Sperrmoment in einem Sperrmomentregler auf das maximal übertragbare Antriebsmoment eingestellt, das sich ergibt als Funktion aus den Parametern für die Getriebeübersetzung i und die Fahrzeuggeschwindigkeit v_{Fzg}, die über Zuleitung dem Sperrmomentregler eingegeben werden. Das so bestimmte maximal übertragbare Antriebsmoment wird als geregeltes Sperrmoment Mₛₚ über einen Ausgang ausgegeben.

Gemäß einer weiteren bevorzugten Ausgestaltung der Erfindung wird beim Erkennen, dass ein Rad an einer Hinterachse durchdreht, das Sperrmoment an der Quersperre der Hinterachse so weit erhöht, bis das Davonlaufen des Rades abgefangen ist, so dass am gegenüberliegenden Rad ein grö-ßeres Drehmoment übertragen werden kann. Durch Aufbau einer anteiligen Sperrwirkung gleichzeitig auch am Längsdifferential gemäß der Erfindung, können Pendelschwingungen im Antriebsstrang zwischen Vorderachse und Hinterachse unterdrückt werden. Das ist besonders dann wichtig, wenn durch Gewichtsverlagerung infolge von Steigung an Gefällen eine andere Aufteilung der Antriebsmomente erforderlich ist.

Die Erfindung wird im folgenden anhand eines Ausführungsbeispiels dargestellt.
Es zeigen:
- Fig. 1: einen ersten Teil einer Schaltungsanordnung für eine selbsttätige Ansteuerung einer Differentialsperre in einer Achse eines Fahrzeugs gemäß der Erfindung,
- Fig. 2: einen zweiten Teil der Schaltungsanordnung, der anschließt an den ersten Teil der Schaltungsanordnung gemäß Fig. 1,

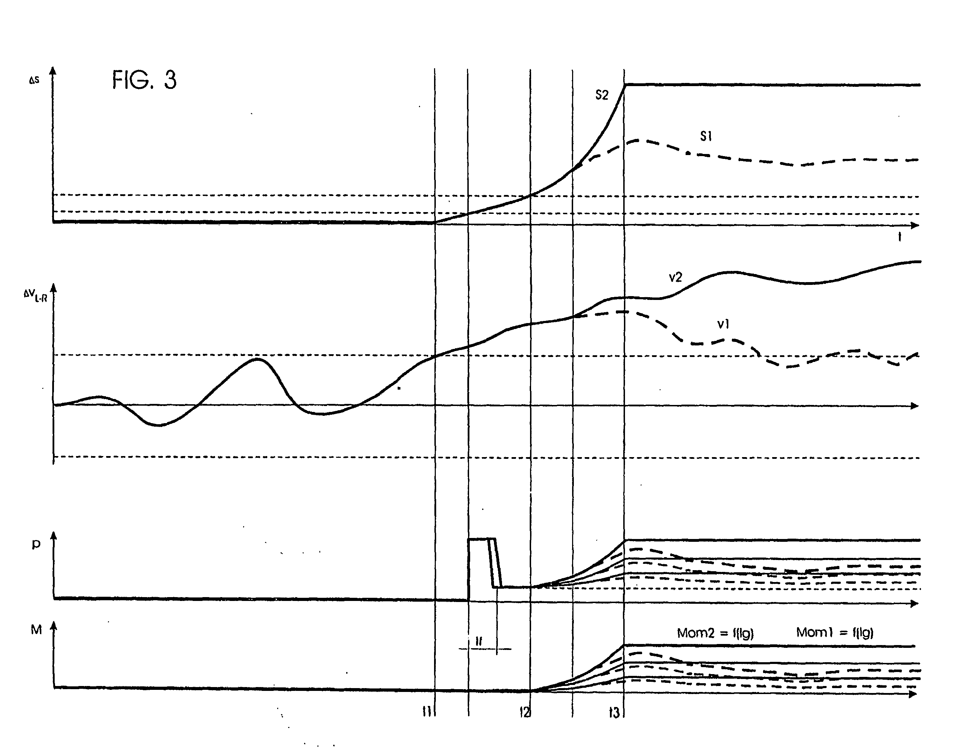

- Fig. 3: diagrammartige Darstellungen der Ansteuerung von der mindestens einen Differentialsperre im Antriebsstrang eines Fahrzeugs gemäß der Erfindung,

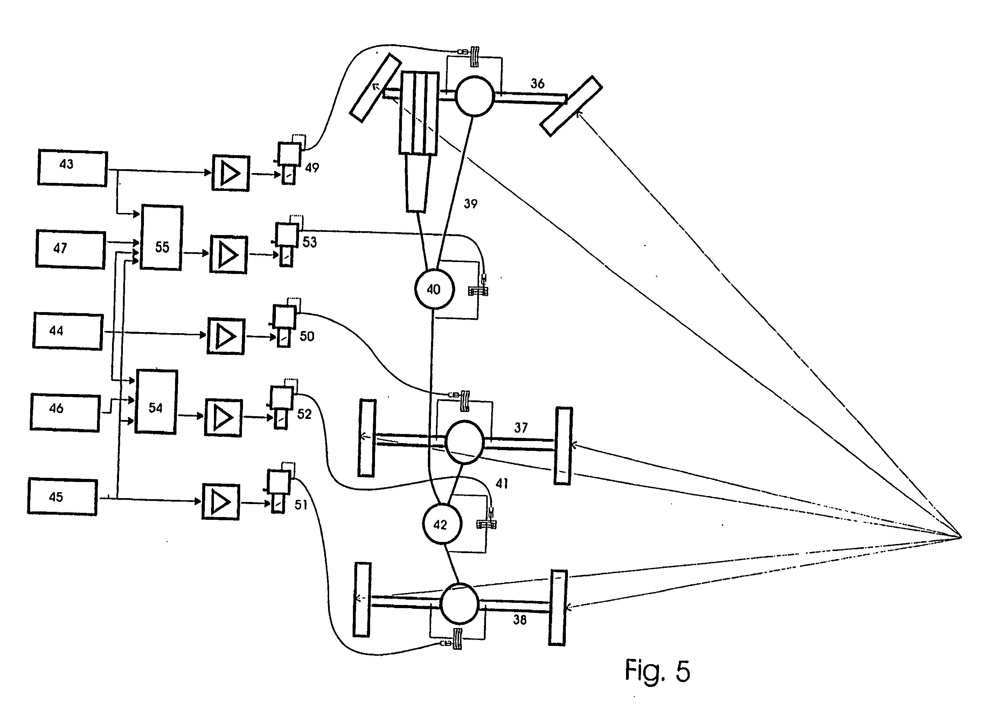

- Fig. 4: diagrammartige Darstellungen der Ansteuerung einer Kupplung der Differentialsperre gemäß Fig. 3 und
- Fig. 5: eine schematische Ansicht eines Antriebsstrangs eines allradgetriebenen 6x6-Fahrzeugs mit einem Schaltplan für selbsttätiges Ansteuern der Differentialsperre gemäß der Erfindung.

### Fig. 1, 2:

Eine Schaltungsanordnung 1 einer Steuervorrichtung dient zur Ermittlung des Sperrmoments für eine Quersperre für ein Fahrzeug mit Knicklenkung (nicht dargestellt) eines Fahrzeugs aus Signalen, die von Sensoren (nicht dargestellt) am Fahrzeug generiert werden. Für weitere Differentialsperren an weiteren Hinter- oder Längsachsen, z. B. eines allradgetriebenen 6x6-Fahrzeugs, sind entsprechende Schaltungsanordnungen 1' ... vorzusehen.

### Fig. 1:

Vorgaben für die Gewichtung des aufgesplitteten Schlupfsignals werden über eine Leitung 2 übermittelt. Das Radgeschwindigkeitssignal von einem Sensor für die Geschwindigkeit vₗᵢₙₖₛ des Rades vorn links wird über Leitung 3 übermittelt. Das Radgeschwindigkeitssignal von einem Sensor für die Geschwindigkeit v_{rechts} des Rades vorn rechts wird über Leitung 4 übermittelt. Die Fahrzeug-Referenzgeschwindigkeit wird aus allen Radgeschwindigkeiten und dem Fahrzeugzustand ebildet und über die Bezugs-Geschwindigkeit v_{Fzgref} des Fahrzeugs über Leitung 5 übermittelt. Signale von einem Sensor für die Lenkwinkel des Fahrzeugs werden über Leitung 6 übermittelt. Vorgaben für die zulässige Schlupfgeschwindigkeit v_{schlupfzul} werden über Leitung 7 zugeführt. Vorgaben in Abhängigkeit des Lenkwinkelgradienten für Knicklenkung bzw. Reifenrollradius Δv des Fahrzeugs werden über Leitung 8 übermittelt. Der Geschwindigkeitsanteil von einem Sensor für die Einfederung Δv des Fahrzeugs werden über Leitung 9 übermittelt.

Die Geschwindigkeit vₗᵢₙₖₛ und für die Geschwindigkeit v_{rechts} der Räder vorn werden in einem ersten Addierer 10 voneinander abgezogen. Die Bezugs-Geschwindigkeit v_{Fzgref} und die Abhängigkeit von einer Lenktabelle 11 für den jeweiligen Lenkwinkel des Fahrzeugs werden in einem Operator 12 multipliziert und diese Geschwindigkeit von den Differenzen aus dem ersten Addierer 10 in einem zweiten Addierer 13 abgezogen. Positive Ergebnisse Δvₛₗ₊ aus den Radgeschwindigkeitssignalen für die Geschwindigkeit vₗᵢₙₖₛ, die Geschwindigkeit v_{rechts}, die Bezugs-Geschwindigkeit v_{Fzgref} und dem Lenkwinkel aus dem Multiplizierer 12 werden über Leitung 14 einem dritten Addierer 15 zugeführt, in dem die Vorgaben für zulässige Schlupfgeschwindigkeit v_{schlupfzul} abgezogen und die Summe aus den Vorgaben für Knicklenkung bzw. Reifenrollradius Δv mit dem Anteil für die Einfederung Δv korrigiert werden. Negative Ergebnisse Δvₛₗ₋ aus den Radgeschwindigkeitssignalen für die Geschwindigkeit vₗᵢₙₖₛ, die Geschwindigkeit v_{rechts}, die Bezugs-Geschwindigkeit V_{Fzgref} und dem Lenkwinkel aus dem zweiten Addierer 13 werden über Leitung 16 einem vierten Addierer 17 zugeführt, in dem die Vorgaben für zulässigen Schlupf v_{schlupfzul} addiert und die Summe aus den Vorgaben für Knicklenkung bzw. Reifenrollradius Δv mit dem Anteil für die Einfederung Δv korrigiert werden. Die positiven Ergebnisse Δvₛₗ₊ aus dem dritten Addierer 15 werden mit den Vorgaben für die Schlupfgewichtung multipliziert und in einem ersten Integrator 18 mit Begrenzung 19 integriert, und die Summe (Schlupfsumme) über Leitung 21 ausgegeben. Die negativen Ergebnisse Δvₛₗ₋ aus dem vierten Addierer 17 werden mit den Vorgaben für die Gewichtung der Steuerung multipliziert, in einem zweiten Integrator 22 mit Begrenzung 23 integriert, und die Summe (Schlupfsumme) über Leitung 25 ausgegeben.

### Fig. 2:

Der Ausgang 21 aus dem Integrator 18 mit Begrenzung 19 entspricht wiederum dem Eingang 21 eines Funktionsgliedes 26, und der Ausgang 25 aus dem Integrator 22 mit Begrenzung 23 entspricht dem Eingang 25 zur Bildung der Absolutwerte der negativen Ergebnisse Δvₛₗ₋ in Operator 27. Funktionsglied 26 ermittelt das Maximum aus den Summen der positiven Ergebnisse Δvₛₗ₊ und den Absolutwerten aus Operator 27 und dieses Maximum wird in einem fünften Addierer 28 mit einer Vorgabe aus Zuleitung 29 für eine Schwelle Δsₘₐₓ für ein Hindernis abgeglichen und aus dem Abgleich mit einem Faktor k das angeforderte Sperrmoment ermittelt. In einem anschließenden Funktionsglied 30 werden zu steile zeitliche Zu- und Abnahmen des angeforderten Sperrmoments begrenzt und dann dieses begrenzte Sperrmoment in einem Sperrmomentskalierer 31 auf das maximal vom Motor erzeugte, übertragbare Antriebsmoment eingestellt, das sich ergibt als Funktion aus den Parametern für die Getriebeübersetzung i und die Fahrzeuggeschwindigkeit v_{Fzg}, die über Zuleitung 32 dem Sperrmomentregler 31 eingegeben werden. Das so bestimmte maximal übertragbare Antriebsmoment skaliert das Sperrmoment Mₛₚ und wird über einen Ausgang 33 ausgegeben. Damit sich Bodenunebenheiten nicht störend auswirken, ist ein Tiefpaßfilter 20 vorgesehen, der kurzfristige Spitzen unterdrückt. Mit der Zuleitung 32 werden Informationen des Getriebeabtriebsmoments in den Sperrmomentskalierer 31 eingebracht und skaliert, damit das vom Regler und der Vorsteuerung angeforderte relative Sperrmoment auf das Niveau des aktuell vorhandenen Antriebsmoments gebracht wird. Damit soll verhindert werden, daß das angeforderte Sperrmoment nicht höher wird als das vorhandene Antriebsmoment. Über die Zuleitung 29 wird über den Addierer die Ansprechschwelle des nachfolgenden Reglers eingestellt.

### Fig. 3:

Gezeigt sind diagrammartig jeweils als Funktion der Zeit für positiven Schlupf von unten nach oben
1. Sperrmomente,
2. Differenzgeschwindigkeiten Δvᵣ₋ₗ zwischen rechten und linkem Rad = Schlupf und
3. Schlupfwege.

Solange die Differenzgeschwindigkeiten Δvᵣ₋ₗ zwischen linken und rechten Rädern den zulässigen Schlupf v_{schlupfzul} nicht überschreiten (zweites Diagramm), bleibt die Kupplung der Differentialsperre frei. Bei Überschreiten des zulässigen Schlupfs v_{schlupfzul} bei t1 wird die Kupplung der Differentialsperre in Bereitschaft gebracht bis zum Erreichen einer vorbestimmbaren Schwelle Δsl (erstes Diagramm). Bei Überschreiten der vorbestimmbaren Schwelle und weiterer Zunahme des Schlupfs wird die Kupplung der Differentialsperre weiter zum Schließen gebracht und zum Zeitpunkt t2 bei Überschreiten eines Wertes Δsₘₐₓ, der einem maximalen Hindernis bei einer Geschwindigkeit entspricht, ist die Kupplung der Differentialsperre geschlossen und beginnt die Kupplung Sperrmomente größer 0 % an der Differentialsperre zu übertragen (erstes Diagramm). Bei weiter zunehmendem Schlupf steigt das Sperrmoment ohne Regelung gemäß Funktion Mom2 an der Differentialsperre weiter an bis auf 100 % (erstes Diagramm) zum Zeitpunkt t4. Mit Regelung der Sperrmomente an der Differentialsperre auf das maximal übertragbare Antriebsmoment gemäß der gestrichelt angegebenen Funktion Mom1 bleiben ab dem Zeitpunkt tr die geregelten Schlupfwerte für die Werte von Weg Δs gemäß der gestrichelten Linie S1 und Geschwindigkeit Δv gemäß der gestrichelten Linie V1 zurück hinter den ungeregelten Schlupfwerten für die Werte von Weg Δs gemäß der durchgezogenen Linie S2 und Geschwindigkeit Δv gemäß der durchgezogenen Linie V2.

### Fig. 4:

In Abhängigkeit vom Einfedern der Räder wird ab einem vorbestimmten Schlupf eine Kupplung einer Differentialsperre des Fahrzeugs in Bereitschaft gebracht, indem ab Zeitpunkt t1 während einer in Abhängigkeit von der Vorgeschichte variablen Füllzeit tF ein Druck p auf die Kupplung der Differentialsperre aufgebracht wird bis die Kupplung zum Zeitpunkt t2 quasi anliegt oder bereit ist, ohne jedoch Sperrmomente zu übertragen. Anschließend wird der Druck p auf die Kupplung der Differentialsperre abgesenkt auf das übertragbare Antriebsmoment pa gemäß Ausgabe Mₛₚ bei 33.

### Fig. 5:

Der Antriebsstrang 35 eines allradgetriebenen 6x6-Fahrzeugs weist eine angetriebene Vorderachse 36, eine erste angetriebene Hinterachse 37 und eine zweite angetriebene Hinterachse 38, jeweils mit Querdifferential und mit linkem und rechtem Rad auf. Zwischen Vorderachse 36 und erster angetriebenen Hinterachse 37 ist eine erste angetriebene Längsachse 39 mit einem ersten Längsdifferential 40 und zwischen erster angetriebenen Hinterachse 37 und zweiter angetriebenen Hinterachse 38 ist eine zweite angetriebene Längsachse 41 mit einem zweiten Längsdifferential 42. Jedes der 5 Differentiale zu den Achsen 36, 37, 38, 39 und 41 ist über eine jeweils zugeordnete Kupplung separat sperrbar.

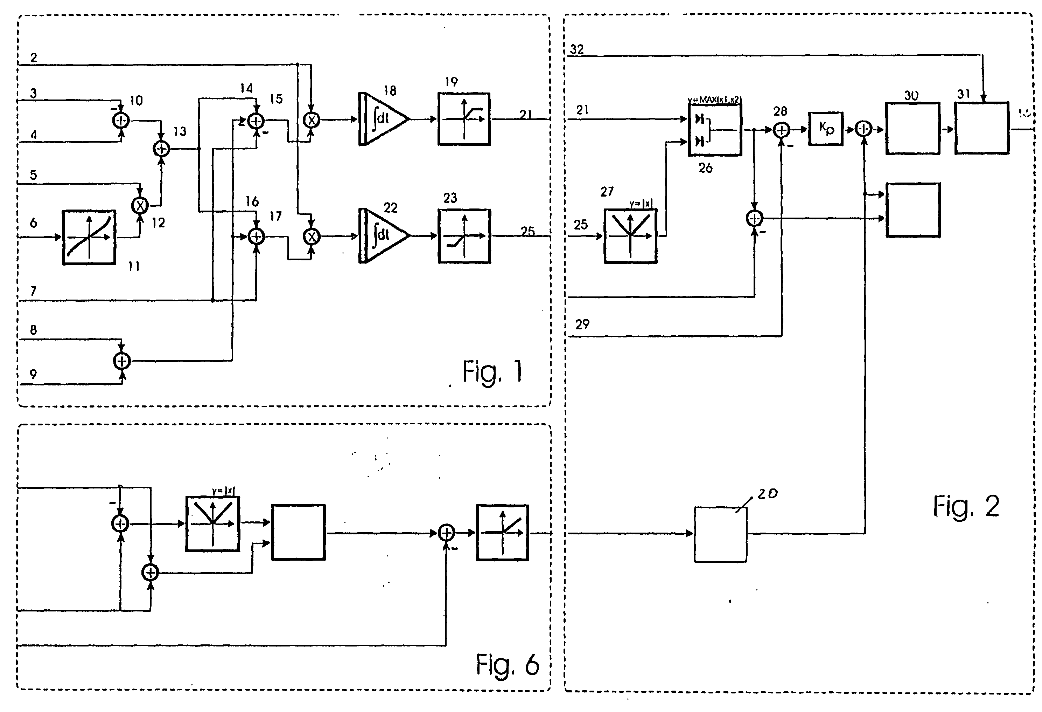

Die geregelten Sperrmomente Mₛₚ für jede der Kupplungen zum Sperren eines der Differentiale zu den Achsen 36, 37, 38, 39 und 41 werden zur Verfügung gestellt in Abhängigkeit von Geschwindigkeit, Lenkwinkel und Einfederwegen, Motormoment, Getriebeübersetzung etc. des allradgetriebenen 6x6-Fahrzeugs am jeweiligen Eingang 43 bis 47 des Schaltungsplans 48 der Steuervorrichtung, wobei z. B. der Eingang 43 dem Ausgang 33 aus Fig. 2 der Schaltungsanordnung 1 entspricht.

Jede der separat sperrbaren Kupplung ist mit einem Stellglied 49 bis 53 mit je einem Ventil verbunden und jedes der Stellglieder 49 bis 53 wird über je eine zugehörige Endstufe/Verstärker in Abhängigkeit vom für die von der zu sperrenden Vorder-, Hinter- oder Längsachse übertragbaren Moment Mₛₚ vom jeweiligen Eingang 43 bis 47 beaufschlagt, wobei jedes der Querdifferentiale das zweifache des kleineren Moments überträgt, das vom rechten oder linken Rad an der jeweiligen Achse 36, 37, 38 noch übertragen werden kann. Die Sperrmomente Mₛₚ für die Längsdifferentiale 40, 42 werden in ersten und zweiten Komparatoren 54, 55 so eingestellt, daß das größte der von den Querdifferentialen übertragbaren Momente an die Sperren der Längsdifferentiale 40, 42 übertragen wird, wobei das zweite Längsdifferential 42 zwischen erster angetriebener Hinterachse 37 und zweiter angetriebener Hinterachse 38 das übertragbare Moment an der angetriebenen Vorderachse 36 nicht berücksichtigt.

### Bezugszeichen

- 1: Schaltungsanordnung
- 2 bis 9: Leitungen
- 10: erster Addierer
- 11: Lenktabelle
- 12: Operator
- 13: Multiplizierer
- 14: Leitung
- 15: dritter Addierer
- 16: Leitung
- 17: vierter Addierer
- 18: Integrator
- 19: Begrenzung
- 20: Tiefpaßfilter
- 21: Leitung
- 22: zweiter Integrator
- 23: Begrenzung
- 25: Ein-/Ausgang
- 26: Funktionsglied
- 27: Operator
- 28: fünfter Addierer
- 29: Zuleitung
- 30: Funktionsglied
- 31: Sperrmomentskalierer
- 32: Zuleitung
- 33: Ausgang
- 35: Antriebsstrang
- 36: angetriebene Vorderachse
- 37: erste angetriebene Hinterachse
- 38: zweite angetriebene Hinterachse
- 39: erste angetriebene Längsachse
- 40: Längsdifferential
- 41: zweite angetriebene Längsachse
- 42: zweites Längsdifferential 42
- 43 bis 47: Eingänge
- 48: Schaltungsplan
- 49 bis 53: Stellglied
- 54, 55: Komparatoren

## Patentansprüche

1. Vorrichtung zur selbsttätigen Ansteuerung von mindestens einer Differentialsperre im Antriebsstrang (35) eines Fahrzeugs, insbesondere einer Differentialsperre im Antriebsstrang (35) eines allradgetriebenen Fahrzeugs, mit Sensoren, die Impulse entsprechend der jeweiligen Drehung von Wellen des Differentials und daraus Schlupfsignale bilden, und mindestens einer Steuervorrichtung (1), der diese zugeführt werden und die in Abhängigkeit von den Impulsen oder Schlupfsignalen eine Sperrkupplung des Differentials steuert, **dadurch gekennzeichnet, dass** mindestens ein Sensor vorgesehen ist, mit dem eine Information entsprechend der Einfederwege der einzelnen Räder des Fahrzeugs gebildet und der Steuervorrichtung (1) zugeführt werden, die als Einflußgrößen für das Verhalten der Steuerung der Sperrkupplung des Differentials mit herangezogen werden.

2. Vorrichtung gemäß Anspruch 1, **dadurch gekennzeichnet, dass** die Sperrmomente an einer Achse (36, 37, 38, 39, 41) in Abhängigkeit vom Einfederungsunterschied zwischen linkem und rechtem Rad oder Vorderachse zur Hinterachse einstellbar sind.

3. Vorrichtung gemäß Anspruch 2, **dadurch gekennzeichnet, dass** die Sperrmonente für die weiteren im Antriebsstrang (35) gelegenen Differentialsperren mit entsprechenden Sperrmomenten einstellbar sind.

4. Vorrichtung gemäß Anspruch 1, **dadurch gekennzeichnet, dass** die Differentialsperre formschlüssig ausgebildet ist.

5. Vorrichtung gemäß Anspruch 1, **dadurch gekennzeichnet, dass** die Information der Einfederwege oder der Radaufstandskräfte über einen CAN-Bus des Fahrzeugs übertragbar sind.

6. Vorrichtung gemäß Anspruch 1, **dadurch gekennzeichnet, dass** die Steuervorrichtung eine Schaltungsanordnung (1)enthält zur Ermittlung der Ansteuerungsparameter für eine Quersperre einer Vorderachse (36) aus Signalen, die von Sensoren am Fahrzeug generiert werden.

7. Vorrichtung gemäß Anspruch 1, **dadurch gekennzeichnet, dass** in der Steuervorrichtung (1) für weitere Differentialsperren an weiteren Hinter- oder Längsachsen (37, 38, 39, 41), z. B. eines allradgetriebenen 6x6-Fahrzeugs, entsprechende Schaltungsanordnungen (1') vorgesehen sind.

8. Verfahren zum Betrieb einer Vorrichtung gemäß Anspruch 1, **gekennzeichnet durch** Erfassen der Einfederwege eines Fahrzeugs, und Beaufschlagen mindestens einer Differentialsperre mit einem Sperrmoment in Abhängigkeit von den Einfederwegen oder Radaufstandskräften.

9. Verfahren gemäß Anspruch 8, **gekennzeichnet durch**
- Vorgeben einer Gewichtung einer Steuerung,
- Übermitteln von Impulsen von einem Sensor für die Geschwindigkeit (vₗᵢₙₖₛ) des Rades vorn links,
- Übermitteln von Impulsen von einem Sensor für die Geschwindigkeit (v_{rechts}) des Rades vorn rechts,
- Übermitteln von Impulsen von einem Sensor für die Bezugs-Geschwindigkeit (v_{Fzgref}) des Fahrzeugs,
- Übermitteln von Impulsen eines Sensors für Lenkwinkel,
- Vorgeben von zulässigem Schlupf (v_{schlupfzul}) des Fahrzeugs,
- Vorgeben von Knicklenkung und Reifenrollradius (Δv) des Fahrzeugs,
- Übermitteln von Signalen von einem Sensor für die Einfederung (Δv) des Fahrzeugs,
- Abziehen der Impulse für die Geschwindigkeit (vₗᵢₙₖₛ) und für die Geschwindigkeit (v_{rechts}) der Räder vorn in einem ersten Addierer (10),
- Multiplizieren der Impulse für die Bezugs-Geschwindigkeit (v_{Fzgref}) und in Abhängigkeit von einer Lenktabelle (11) ermittelte Impulse für die jeweiligen Lenkwinkel des Fahrzeugs in einem Operator (12),
- Abziehen dieser Ergebnisse von den Differenzen aus dem ersten Addierer (10) in einem zweiten Addierer (13),
- Zuführen der positiven Ergebnisse (Δvₛₗ₊) aus den Impulsen für die Geschwindigkeit (vₗᵢₙₖₛ), die Geschwindigkeit (v_{rechts}), die Bezugs-Geschwindigkeit (v_{Fzgref}) und die Lenkwinkel aus dem zweiten Addierer (12) über Leitung (14) einem dritten Addierer (15), in dem die Vorgaben für zulässigen Schlupf (v_{schlupfzul}) abgezogen und die Summe aus den Vorgaben für Knicklenkung und Reifenrollradius (Δv) mit den Impulsen für die Einfederung (Δv) berücksichtigt werden und
- Zuführen der negativen Ergebnisse (Δvₛₗ₋) aus den Impulsen für die Geschwindigkeit (vₗᵢₙₖₛ), die Geschwindigkeit (v_{rechts}), die Bezugs-Geschwindigkeit (v_{Fzgref}) und die Lenkwinkel aus dem zweiten Addierer (13) über Leitung (16) einem vierten Addierer (17), in dem die Vorgaben für zulässigen Schlupf v_{schlupfzul} addiert und die Summe aus den Vorgaben für Knicklenkung und Reifenrollradius (Δv) mit den Impulsen für die Einfederung (Δv) berücksichtigt werden,
- Multiplizieren der positiven Ergebnisse (Δvₛₗ₊) aus dem dritten Addierer (15) mit den Vorgaben für die Gewichtung der Steuerung in einem ersten Integrator (18) mit Begrenzung (19), Integrieren über eine Schleife (20) und Ausgeben der Summe über Leitung (21),
- Multiplizieren der negativen Ergebnisse (Δvₛₗ₋) aus dem vierten Addierer (17) mit den Vorgaben für die Gewichtung der Steuerung in einem zweiten Integrator (22) mit Begrenzung (23), Iterieren über eine Schleife (24) und Ausgeben der Summe über Leitung (25),
- Bilden der Absolutwerte der negativen Ergebnisse Δvₛₗ₋ in Operator (27),
- Ermitteln des Maximums der Summen der positiven Ergeb-Ergebnisse (Δvₛₗ₊) und den Absolutwerten aus Operator (27) in Komparator (26), Abgleichen dieses Maximums in einem fünften Addierer (28) mit einer Vorgabe für eine Schwelle (Δsₘₐₓ) für ein Hindernis, Ermitteln mit einem Faktor k das angeforderte Sperrmoment aus dem Abgleich,
- Begrenzen in einem anschließenden Funktionsglied (30) von zu steilen zeitlichen Zu- und Abnahmen des angeforderten Sperrmoments,
- Einstellen dieses begrenzten Sperrmoments in einem Sperrmomentregler (31) auf das maximal abgegebene, übertragbare Antriebsmoment, das sich ergibt als Funktion aus den Parametern für die Getriebeübersetzung i und die Fahrzeuggeschwindigkeit (v_{Fzg}), und
- Ausgeben des so bestimmten, maximal übertragbaren Antriebsmoments als geregeltes Sperrmoment (Mₛₚ) über einen Ausgang (33).

10. Verfahren gemäß Anspruch 8, **gekennzeichnet durch** Feststellen, dass ein Rad an einer Hinterachse (37, 38) des Fahrzeugs durchdreht, Aktivieren der Quersperre der Hinterachse (37, 38), und Aufbauen einer anteiligen Sperrwirkung gleichzeitig auch an den betroffenen Längsdifferentialen.

11. Verfahren gemäß Anspruch 8, **gekennzeichnet durch** Verknüpfen der Ansteuerung über Subschwellen bei formschlüssigen Differentialsperren.

12. Verfahren gemäß Anspruch 8, **gekennzeichnet durch** Ermitteln des Abtriebsmoments **durch** Mab = Pmot/v oder Mab = nMot*Mmot/v bei feinstufigen Getrieben.

13. Verfahren gemäß Anspruch 8, **gekennzeichnet durch** Herabsetzen des maximal übertragbaren Moments gemäß dem bei einer Getriebeübersetzung möglichen Abtriebsmoment auf 0 bis 120 % des bei der Getriebeübersetzung möglichen Sperrmoments.

## Claims

1. Device for automatically controlling at least one differential lock in the drive train (35) of a vehicle, in particular, a differential lock in the drive train (35) of an all-wheel-drive vehicle, having sensors which produce pulses according to the respective rotation of shafts of the differential and, from said pulses, produce slip signals, and having at least one control device (1) to which said pulses are supplied and which, in dependence on the pulses or slip signals, controls a locking coupling of the differential, **characterized in that** there is provided at least one sensor by means of which information corresponding to the jounce travels of the individual wheels of the vehicle is generated and supplied to the control device (1), this information being included as influencing quantities for the behaviour of the control of the locking coupling of the differential.

2. Device according to Claim 1, **characterized in that** the locking torques on an axle (36, 37, 38, 39, 41) can be set in dependence on the difference in jounce between a left and right wheel or from the front axle to the rear axle.

3. Device according to Claim 2, **characterized in that** the locking toques for the further differential locks disposed in the drive train (35) can be set with appropriate locking torques.

4. Device according to Claim 1, **characterized in that** the differential lock is of positive design.

5. Device according to Claim 1, **characterized in that** the information relating to the jounce travels or wheel contact forces can be transmitted via a CAN bus of the vehicle.

6. Device according to Claim 1, **characterized in that** the control device includes a circuit arrangement (1) for determining the control parameters for a transverse lock of a front axle (36) from signals which are generated by sensors on the vehicle.

7. Device according to Claim 1, **characterized in that** there are provided in the control device (1) appropriate circuit arrangements (1') for further differential locks on further rear or longitudinal axles (37, 38, 39, 41), e.g., of an all-wheel-drive 6x6 vehicle.

8. Method for operating a device according to Claim 1, **characterized by** detection of the jounce travels of a vehicle, and application of a locking torque to at least one differential lock in dependence on the jounce travels or wheel contact forces.

9. Method according to Claim 8, **characterized by**
- specification of a weighting of a control,
- transmission of pulses from a sensor for the speed (v_{left}) of the front left wheel,
- transmission of pulses from a sensor for the speed (v_{right}) of the front right wheel,
- transmission of pulses from a sensor for the reference speed (v_{vehref}) of the vehicle,
- transmission of pulses of a sensor for steering angle,
- specification of admissible slip (v_{slipadm}) of the vehicle,
- specification of articulated steering and loaded-tyre radius (Δv) of the vehicle,
- transmission of signals from a sensor for the jounce (Δv) of the vehicle,
- subtraction, in a first adder (10), of the pulses for the speed (v_{left}) and for the speed (v_{right}) of the front wheels,
- multiplication, in an operator (12), of the pulses for the reference speed (v_{vehref}) and pulses, determined in dependence on a steering table (11), for the respective steering angle of the vehicle,
- subtraction, in a second adder (13), of these results from the differences from the first adder (10),
- supply of the positive results (Δvₛₗ₊) from the pulses for the speed (v_{left}), the speed (v_{right}), the reference speed (v_{vehref}) and the steering angle from the second adder (12), via line (14), to a third adder (15) in which the specified values for admissible slip (v_{slipadm}) are subtracted and the sum from the specified values for articulated steering and loaded-tyre radius (Δv) are taken into account with the pulses for the jounce (Δv), and
- supply of the negative results (Δvₛₗ₋) from the pulses for the speed (v_{left}), the speed (v_{right}), the reference speed (v_{vehref}) and the steering angle from the second adder (13), via line (16), to a fourth adder (17) in which the specified values for admissible slip v_{slipadm} are added and the sum from the specified values for articulated steering and loaded-tyre radius (Δv) are taken into account with the pulses for the jounce (Δv),
- multiplication, in a first integrator (18) with limitation (19), of the positive results (Δvₛₗ₊) from the third adder (15) by the specified values for the weighting of the control, integration via a loop (20) and output of the sum via line (21),
- multiplication, in a second integrator (22) with limitation (23), of the negative results (Δvₛₗ₋) from the fourth adder (17) by the specified values for the weighting of the control, iteration via a loop (24) and output of the sum via line (25),
- production of the absolute values of the negative results (Δvₛₗ₋) in operator (27),
- determination, in comparator (26), of the maximum of the sums of the positive results (Δvₛₗ₊) and the absolute values from operator (27), adjustment of this maximum, in a fifth adder (28), with a predefined value for a threshold (Δsₘₐₓ) for an impediment, determination of the required locking torque for the adjustment with a factor k,
- limitation, in a subsequent function element (30), of excessively steep time increases and decreases of the required locking torque,
- setting of this limited locking torque, in a locking-torque regulator (31), to the maximum emitted transmissible drive torque that results as a function from the parameters for the transmission ratio i and the vehicle speed (vᵥₑₕ), and
- output, via an output (33), of the thus determined maximum transmissible drive torque as a regulated locking torque (M_{lock}).

10. Method according to Claim 8, **characterized by** ascertainment that a wheel on a rear axle (37, 38) of the vehicle is spinning, activation of the transverse lock of the rear axle (37, 38), and simultaneous build-up of a proportional locking effect also on the affected longitudinal differentials.

11. Method according to Claim 8, **characterized by** linking of the control via sub-thresholds in the case of positive differential locks.

12. Method according to Claim 8, **characterized by** determination of the drive torque through Mab = Pmot/v or Mab = nMot*Mmot/v in the case of closely-stepped transmissions.

13. Method according to Claim 8, **characterized by** reduction of the maximum transmissible torque, according to the drive torque that is possible for a transmission ratio, to 0 to 120 % of the locking torque that is possible for the transmission ratio.

## Revendications

1. Dispositif de commande automatique d'au moins un verrouillage du différentiel de la chaîne cinématique (35) d'un véhicule, notamment d'un verrouillage de différentiel de la chaîne cinématique (35) d'un véhicule à quatre roues motrices avec des capteurs qui génèrent des impulsions en fonction de la rotation des arbres du différentiel et des signaux de glissement qui en résultent, et au moins un dispositif de commande (1) qui commande un embrayage de verrouillage en fonction des impulsions ou des signaux de glissement du différentiel, **caractérisé en ce qu'**au moins un capteur est prévu grâce auquel des informations sont générées en fonction des courses d'amortissement des roues du véhicule et envoyées au dispositif de commande (1), et sont utilisées comme des grandeurs d'influence pour le comportement de la commande de l'embrayage de verrouillage du différentiel.

2. Dispositif selon la revendication 1, **caractérisé en ce que** les couples de verrouillage peuvent être réglés sur un essieu (36, 37, 38, 39, 41) en fonction de la différence d'amortissement entre la roue gauche et la roue droite ou entre l'essieu avant et l'essieu arrière.

3. Dispositif selon la revendication 2, **caractérisé en ce que** les couples de verrouillage peuvent être réglés pour les autres verrouillages de différentiel (35) disposés dans la chaîne cinématique avec des couples de verrouillage correspondants.

4. Dispositif selon la revendication 1, **caractérisé en ce que** le verrouillage de différentiel est conçu avec une complémentarité de forme.

5. Dispositif selon la revendication 1, **caractérisé en ce que** les informations des courses d'amortissement ou des forces de contact de la roue peuvent être transmises par l'intermédiaire d'un bus CAN du véhicule.

6. Dispositif selon la revendication 1, **caractérisé en ce que** le dispositif de commande contient un circuit (1) pour déterminer le paramètre de commande pour un verrouillage transversal d'un essieu avant (36) à partir de signaux générés par des capteurs sur le véhicule.

7. Dispositif selon la revendication 1, **caractérisé en ce que**, dans le dispositif de commande (1), des circuits (1') correspondants sont prévus pour d'autres verrouillages de différentiel sur d'autres essieux arrière ou longitudinaux (37, 38, 39, 41), par exemple d'un véhicule à traction intégrale 6x6.

8. Procédé d'utilisation d'un dispositif selon la revendication 1, **caractérisé par** la détection des courses d'amortissement d'un véhicule et par l'alimentation d'au moins un verrouillage de différentiel avec un couple de verrouillage en fonction des courses d'amortissement ou des forces de contact des roues.

9. Procédé selon la revendication 8, **caractérisé par**
- la prédétermination d'une pondération d'une commande,
- la transmission d'impulsions d'un capteur pour la vitesse (vₗᵢₙₖₛ) de la roue avant gauche,
- la transmission d'impulsions d'un capteur pour la vitesse (v_{rechts}) de la roue avant droite,
- la transmission d'impulsions d'un capteur pour la vitesse de référence (v_{Fzgref}) du véhicule,
- la transmission d'impulsions d'un capteur pour l'angle de direction,
- la prédétermination du glissement admissible (v_{schlupfzul}) du véhicule,
- la prédétermination d'une direction pivotante et d'un rayon de roulage du pneu (Δv) du véhicule,
- la transmission de signaux d'un capteur pour l'amortissement (Δv) du véhicule,
- l'utilisation des impulsions pour la vitesse (vₗᵢₙₖₛ) et pour la vitesse (v_{rechts}) des roues avant dans un premier additionneur (10),
- la multiplication des impulsions pour la vitesse de référence (v_{Fzgref}) et d'impulsions déterminées en fonction d'un tableau de direction (11) pour l'angle de direction du véhicule dans un opérateur (12),
- l'utilisation de ces résultats des différences provenant du premier additionneur (10) dans un deuxième additionneur (13),
- l'introduction des résultats positifs (Δvₛₗ₊) provenant des impulsions pour la vitesse (vₗᵢₙₖₛ), la vitesse (v_{rechts}), la vitesse de référence (v_{Fzgref}) et l'angle de direction provenant du deuxième additionneur (12) par l'intermédiaire d'une conduite (14) dans un troisième additionneur (15), dans lequel les valeurs prédéterminées pour le glissement admissible (v_{schlupfzul}) sont ôtées et la somme des valeurs prédéterminées pour la direction pivotante et le rayon de roulage du pneu (Δv) sont prises en compte avec les impulsions pour l'amortissement (Δv) et
- l'introduction des résultats négatifs (Δvₛₗ₋) provenant des impulsions pour la vitesse (vₗᵢₙₖₛ), la vitesse (v_{rechts}), la vitesse de référence (v_{Fzgref}) et l'angle de direction provenant du deuxième additionneur (13) par l'intermédiaire d'une conduite (16) dans un quatrième additionneur (17), dans lequel les valeurs prédéterminées pour le glissement admissible (v_{schlupfzul}) sont additionnées et la somme des valeurs prédéterminées pour la direction pivotante et le rayon de roulage du pneu (Δv) sont prises en compte avec les impulsions pour l'amortissement (Δv),
- la multiplication des résultats positifs (Δvₛₗ₊) provenant du troisième additionneur (15) avec les valeurs prédéterminées pour la pondération de la commande dans un premier intégrateur (18) avec une limitation (19), l'intégration par l'intermédiaire d'une boucle (20) et l'envoi de la somme par l'intermédiaire d'une conduite (21),
- la multiplication des résultats négatifs (Δvₛₗ₋) provenant du quatrième additionneur (17) avec les valeurs prédéterminées pour la pondération de la commande dans un deuxième intégrateur (22) avec une limitation (23), l'itération par l'intermédiaire d'une boucle (24) et l'envoi de la somme par l'intermédiaire d'une conduite (25),
- la production des valeurs absolues des résultats négatifs (Δvₛₗ₋) dans l'opérateur (27),
- la détermination du maximum des sommes des résultats positifs (Δvₛₗ₊) et des valeurs absolues provenant de l'opérateur (27) dans le comparateur (26), la comparaison de ce maximum dans un cinquième additionneur (28) avec une valeur prédéterminée pour un seuil (Δsₘₐₓ) pour un obstacle, la détermination avec un facteur k du couple de verrouillage nécessaire à partir de la comparaison,
- la limitation dans un organe fonctionnel (30) d'augmentations ou de diminutions trop rapides du couple de verrouillage nécessaire,
- le réglage de ce couple de verrouillage limité dans un régulateur de couple de verrouillage (31) à un couple d'entraînement maximal qui est déterminé en fonction des paramètres pour la démultiplication de la boîte de vitesses i et la vitesse du véhicule (v_{Fzg}), et
- l'envoi du couple d'entraînement maximal ainsi déterminé en tant que couple de verrouillage (Mₛₚ) régulé par l'intermédiaire d'une sortie (33).

10. Procédé selon la revendication 8, **caractérisé par** la constatation qu'une roue de l'essieu arrière (37, 38) du véhicule tourne dans le vide, l'activation du verrouillage transversal de l'essieu arrière (37, 38) et une action de verrouillage en même temps sur les différentiels longitudinaux concernés.

11. Procédé selon la revendication 8, **caractérisé par** la combinaison de la commande par l'intermédiaire de seuils secondaires dans des verrouillages de différentiel à complémentarité de forme.

12. Procédé selon la revendication 8, **caractérisé par** la détermination du couple de sortie par Mab = Pmot/v ou Mab = nMot*Mmot/v dans des boîtes de vitesses à petits étages.

13. Procédé selon la revendication 8, **caractérisé par** la diminution du couple maximal transmissible selon le couple de sortie possible avec la démultiplication de boîte de vitesses, de 0 à 120% du couple de verrouillage possible avec la démultiplication de la boite de vitesses.
